# EUROPEAN PATENT APPLICATION

(11) **EP 4 836 371 A1**
(43) Date of publication of application: **04.11.2026**
(21) Application number: 24921781.1
(22) Date of filing: 20.12.2024
(51) Int. Cl.: H04L 47/129

(54) **MESSAGE PROCESSING METHOD AND APPARATUS, CHIP, DEVICE, STORAGE MEDIUM AND PROGRAM PRODUCT**

(30) Priority: 29.01.2024 CN 202410123002
(71) Applicant: Shenzhen Jaguar Microsystems Co., Ltd., Shenzhen, Guangdong 518100 (CN)
(72) Inventor: LIU, Jingtao, Shenzhen, Guangdong 518100 (CN); HUANG, Kaixin, Shenzhen, Guangdong 518100 (CN); LIU, Wentao, Shenzhen, Guangdong 518100 (CN); WEI, Fen, Shenzhen, Guangdong 518100 (CN); MAO, Yitao, Shenzhen, Guangdong 518100 (CN); BAO, Yalin, Shenzhen, Guangdong 518100 (CN); LV, Tao, Shenzhen, Guangdong 518100 (CN)
(74) Representative: Reddie & Grose LLP
(86) International application number: PCT/CN2024/140941
(87) International publication number: WO 2025/161759

(57) **Abstract**

A packet processing method and apparatus, a chip, a device, a storage medium and a program product are provided. The packet processing method is applied to a packet processing device, the packet processing device includes a receiving module (301), a transmitting module (302), a filtering module (303) and an algorithm execution module (304). The receiving module (301) receives a to-be-processed packet, and triggers a packet processing event corresponding to the to-be-processed packet based on a type of the to-be-processed packet. The filtering module (303) filters out an unenabled event from the packet processing event based on preset event enabling information, and transmits an event request to the algorithm execution module (304), the event request includes event information of a filtered packet processing event. The algorithm execution module executes a processing algorithm of the filtered packet processing event based on the event information to obtain event response information, and transmits the event response information to the transmitting module (302) through the filtering module. The transmitting module (302) adjusts a packet transmitting action based on the event response information.

## Description

### CROSS-REFERENCE TO RELATED APPLICATIONS

The present application claims priority to Chinese patent application No. 202410123002.3, filed on January 29, 2024, and entitled "PACKET PROCESSING METHOD AND APPARATUS, CHIP, DEVICE, STORAGE MEDIUM AND PROGRAM PRODUCT", the entire content of which is incorporated herein by reference.

### TECHNICAL FIELD

The present application relates to the field of chip technologies, and in particular, to a packet processing method and apparatus, a chip, a device, a storage medium, and a program product.

### BACKGROUND

A programmable congestion control (PCC) framework allows a user to enable various event signals included in the PCC framework according to an actual application scenario, and to design and implement a congestion control algorithm by themselves, thereby providing the user with great flexibility to implement an optimal congestion control solution for handling a congestion problem of a server cluster.

In related art, a device supporting the PCC framework operates based on an event-response model. However, presently, PCC event reporting is all concentrated on a source side, a PCC framework on a receiving side does not operate, the scalability of processing algorithms corresponding to packet processing events is low, and it is difficult for a user to flexibly develop a congestion control algorithm driven by the receiving side.

### SUMMARY

In various embodiments of the present application, a packet processing method and apparatus, a chip, a device, a storage medium, and a program product are provided.

In a first aspect, a packet processing method is provided in the present application. The method is applied to a packet processing device. The packet processing device includes a receiving module, a transmitting module, a filtering module, and an algorithm execution module. The method includes:
receiving, by the receiving module, a to-be-processed packet, and triggering, based on a type of the to-be-processed packet, a packet processing event corresponding to the to-be-processed packet;
filtering out, by the filtering module, an unenabled event from the packet processing event based on preset event enabling information, and transmitting an event request to the algorithm execution module, the event request including event information of a filtered packet processing event;
executing, by the algorithm execution module, a processing algorithm of the filtered packet processing event based on the event information to obtain event response information, and transmitting, by the algorithm execution module through the filtering module, the event response information to the transmitting module; and
adjusting, by the transmitting module, a packet transmitting action based on the event response information.

In some embodiments, before transmitting the event request to the algorithm execution module, the method further includes: performing, by the filtering module, preprocessing on initial information of the filtered packet processing event to generate the event information of the filtered packet processing event. The preprocessing includes at least one of: calculation processing, cropping processing, merging processing, or discarding processing.

In some embodiments, the to-be-processed packet includes congestion flag information and/or network telemetry information added by a network forwarding device, the network forwarding device being configured to forward a packet between two packet processing devices.

In some embodiments, the packet processing device further includes a management and control module. Before executing, by the algorithm execution module, the processing algorithm of the filtered packet processing event based on the event information to obtain the event response information, the method further includes: creating, by the management and control module, processing resources of the filtered packet processing event, and starting, by the management and control module, an algorithm process in the algorithm execution module through hot upgrade. Executing, by the algorithm execution module, the processing algorithm of the filtered packet processing event based on the event information to obtain the event response information includes: executing, by the algorithm execution module, the processing algorithm of the filtered packet processing event in the algorithm process based on an algorithm parameter and the event information to obtain the event response information.

In some embodiments, after creating, by the management and control module, the processing resources of the filtered packet processing event and starting, by the management and control module, the algorithm process in the algorithm execution module through hot upgrade, the method further includes:
obtaining, by the management and control module through a congestion control queue, a congestion control entry of the algorithm execution module when executing the processing algorithm, the congestion control entry including algorithm state information of the processing algorithm; and
adjusting, by the management and control module, the algorithm parameter based on the algorithm state information.

In some embodiments, obtaining, by the management and control module through the congestion control queue, the congestion control entry of the algorithm execution module when executing the processing algorithm includes:
creating, by the algorithm execution module, the congestion control entry;
determining, by the algorithm execution module based on head pointer information and tail pointer information of the congestion control queue, whether the congestion control queue is in a full queue state;
on a condition that the congestion control queue is not in the full queue state, adding, by the algorithm execution module, the congestion control entry to a tail of the congestion control queue and flipping flag information of the congestion control queue; and
obtaining, by the management and control module, the congestion control entry in the congestion control queue based on the flag information, and updating, by the management and control module, the head pointer information of the congestion control queue.

In some embodiments, after obtaining, by the management and control module through the congestion control queue, the algorithm state information of the algorithm process when executing the processing algorithm, the method further includes:
on a condition that the algorithm state information is abnormal, releasing, by the management and control module, the processing resources of the filtered packet processing event and exiting, by the management and control module, the algorithm process.

In some embodiments, the algorithm parameter includes a granularity configuration parameter, an event enabling parameter, a feedback enabling parameter, an algorithm execution parameter, and a hardware configuration parameter.

In some embodiments, the event response information includes a priority and a packet transmitting mode of a network path for each packet transmission. Adjusting, by the transmitting module, the packet transmitting action based on the event response information includes: adjusting, by the transmitting module, the packet transmitting action based on the priority and the packet transmitting mode of the network path for each packet transmission. The packet transmitting mode includes a rate-based transmitting mode, a window-based transmitting mode, a token-based transmitting mode, or a credit-based transmitting mode.

In some embodiments, the event response information is configured to adjust a packet transmitting action of a network path corresponding to the event response information, or the event response information is configured to adjust packet transmitting actions of all network paths corresponding to the packet processing device.

In some embodiments, the event request is exchanged between the algorithm execution module and the filtering module through an event request queue, and the event response information is exchanged between the algorithm execution module and the filtering module through an event response queue.

In some embodiments, the event request queue includes an active sub-queue and a commit sub-queue. Transmitting the event request to the algorithm execution module includes:
transmitting, by the filtering module, the event request to the active sub-queue;
aggregating, by the filtering module, the event request through the active sub-queue;
when a number of events in the commit sub-queue is greater than or equal to a first quantity threshold, controlling, by the filtering module, the event request in the active sub-queue to block and wait until a blocking end condition is satisfied, where the blocking end condition includes: the number of events in the commit sub-queue is less than the first quantity threshold, or the number of events in the commit sub-queue is not full and a number of event requests in the active sub-queue is greater than or equal to a second quantity threshold; and
when the number of events in the commit sub-queue is less than the first quantity threshold, transmitting, by the filtering module, the event request in the active sub-queue to the commit sub-queue, so that the algorithm execution module reads the event request from the commit sub-queue.

In some embodiments, after aggregating, by the filtering module, the event request through the active sub-queue, the method further includes: generating, by the filtering module, event information of an aggregated event request based on a type of event aggregation. The type of event aggregation includes an accumulative type and an overwriting type.

In some embodiments, the method further includes: on a condition that a number of events in the event request queue is full, discarding, by the filtering module, the event request in the event request queue based on event discarding configuration information, or transmitting, by the filtering module, indication information to the receiving module. The indication information is configured to instruct the receiving module to stop transmitting the packet processing event to the filtering module.

In some embodiments, starting the algorithm process in the algorithm execution module through hot upgrade includes: storing, by the management and control module, a compilation file corresponding to the processing algorithm in a target storage location, so that a processor of the packet processing device starts the algorithm process by obtaining and loading the compilation file from the target storage location.

In a second aspect, a packet processing apparatus is provided in the present application. The packet processing apparatus includes a receiving module, a transmitting module, a filtering module, and an algorithm execution module.

The receiving module is configured to receive a to-be-processed packet and trigger, based on a type of the to-be-processed packet, a packet processing event corresponding to the to-be-processed packet.

The filtering module is configured to filter out an unenabled event from the packet processing event based on preset event enabling information, and transmit an event request to the algorithm execution module. The event request includes event information of a filtered packet processing event.

The algorithm execution module is configured to execute, based on the event information, a processing algorithm of the filtered packet processing event to obtain event response information, and transmit, through the filtering module, the event response information to the transmitting module.

The transmitting module is configured to adjust a packet transmitting action based on the event response information.

In a third aspect, a chip is provided in the present application. The chip includes the packet processing apparatus of the second aspect.

In a fourth aspect, a computer device is further provided in the present application. The computer device includes a memory and a processor, the memory storing a computer program. The processor, when executing the computer program, implements the steps of the packet processing method of the first aspect.

In a fifth aspect, a computer-readable storage medium is further provided in the present application. The computer-readable storage medium has a computer program stored thereon. The computer program, when executed by a processor, implements the steps of the packet processing method of the first aspect.

In a sixth aspect, a computer program product is further provided in the present application. The computer program product includes a computer program. The computer program, when executed by a processor, implements the steps of the packet processing method of the first aspect.

### BRIEF DESCRIPTION OF THE DRAWINGS

To describe the technical solutions in the embodiments of the present application or in the related art more clearly, the following briefly introduces the accompanying drawings required for describing the embodiments or the related art. Apparently, the accompanying drawings in the following description show only some embodiments of the present application, and a person of ordinary skill in the art may still derive other drawings from these accompanying drawings without creative efforts.
FIG. 1 is a schematic diagram illustrating an application environment of a packet processing method provided by an embodiment of the present application.
FIG. 2 is a schematic diagram illustrating a structure of a packet processing device provided by an embodiment of the present application.
FIG. 3 is a flow diagram illustrating an operation process of a PCC framework endpoint provided by an embodiment of the present application.
FIG. 4 is a flow diagram illustrating algorithm hot upgrade provided by an embodiment of the present application.
FIG. 5 is a schematic diagram illustrating an interaction of a management and control module and an algorithm execution module provided by an embodiment of the present application.
FIG. 6 is another schematic diagram illustrating an interaction of a management and control module and an algorithm execution module provided by an embodiment of the present application.
FIG. 7 is a schematic diagram illustrating compilation of an algorithm execution module provided by an embodiment of the present application.
FIG. 8 is a schematic diagram illustrating compilation of a management and control module provided by an embodiment of the present application.
FIG. 9 is a flow diagram illustrating a packet processing method provided by an embodiment of the present application.
FIG. 10 is a block diagram illustrating a structure of a packet processing apparatus provided by an embodiment of the present application.
FIG. 11 is a schematic diagram illustrating an internal configuration of a computer device provided by an embodiment of the present application.

### DETAILED DESCRIPTION OF T HE EMBODIMENTS

To make the objectives, technical solutions, and advantages of the present application clearer, the following further describes the present application in detail with reference to the accompanying drawings and embodiments. It should be understood that the specific embodiments described herein are only used to explain the present application and are not used to limit the present application.

The following first describes related art.

In related art, a device supporting a PCC framework operates based on an event-response model. A device supporting the PCC framework supports 6 types of event signals that a user can enable, including a firmware signal (referred to as DOCA_PCC_DEV_EVNT_FW), a congestion notification packet (CNP), a packet transmitting signal (referred to as DOCA_PCC_DEV_EVNT_ROCE_CNP), a packet acknowledgment signal (referred to as DOCA_PCC_DEV_EVNT_ROCE_ACK), an unexpected packet acknowledgment signal (referred to as DOCA_PCC_DEV_EVNT_ROCE_NACK), and a network round-trip time (RTT) signal. For example, as shown in Table 1, different event signals correspond to different event meanings, data fields, and data granularities.

**Table 1**

| Event type | Event meaning | Data field | Data granularity |
|---|---|---|---|
| Firmware signal | No description | No meaningful field | None |
| Congestion notification packet (CNP) | After a switch triggers an ECN waterline, it marks a packet with ECN CE, and a data receiving side generates a response packet after filtering based on a time threshold and transmits it back to the data transmitting side. | num_coalesced (CNP aggregation number) | None |
| Packet transmitting signal | Statistics on the number of bytes or packets transmitted by the data transmitting side. | sent_32bytes (transmitted bytes); transmitted_pkts (number of transmitted packets) | 32 bytes; individual |
| Packet acknowledgment signal | Statistics on the number of packets that the data transmitting side determines have been acknowledged by the receiving side. | num_coalesced (ACK aggregated packet number) | individual |
| Unexpected packet acknowledgment signal | Statistics on the number of out-of-order packets that the data transmitting side determines have been transmitted. | num_coalesced (NACK aggregated packet number) | individual |
| Network round-trip time signal | Timestamps marked by the transmitting side and the receiving side for an RTT probe packet. | req_send_timestamp (request send timestamp); req_recv_timestamp (request receive timestamp); resp_send_timestamp (response send timestamp) | ns (nanosecond) |

In addition to the data fields shown in Table 1, each event reported includes common data fields, including a port number (referred to as port_num), a flow identifier (referred to as flow_tag), a packet sequence number (referred to as sn), and an event reporting timestamp (referred to as timestamp). In related art, the response information for an event signal includes a rate (a rate with a unit of 10KB/s) and an RTT event probe indication (referred to as rtt_req, where 1 indicates transmitting an RTT probe packet, and 0 indicates not transmitting an RTT probe packet).

In related art, hot upgrade of a processing algorithm corresponding to a packet processing event is also supported. On a condition that a command to run an algorithm is executed, the algorithm may be in an active state, a standby state, a stopped state, or an error state.

In the active state, the algorithm process is the only active one, receives various reported event requests, and executes the processing process of the corresponding event. In the standby state, the present algorithm process is not actually running, and an algorithm process in the active state is executing event processing. Only when the algorithm process in the active state exits, is disabled, or encounters an error, the present algorithm process in the standby state switches to the active state. In the stopped state, the algorithm process is disabled by the network card firmware, and related resources are released. In the error state, the present algorithm process has an error, and related resources are released.

However, presently, PCC event reporting is all concentrated on a source side (transmitting side), a PCC framework on a destination side (receiving side) does not operate, the scalability of processing algorithms corresponding to packet processing events is low, and it is difficult for a user to flexibly develop a congestion control algorithm driven by the receiving side (i.e., packet receiving side-driven means that the packet receiving side informs the packet transmitting side of a congestion adjustment mode for the next time).

To solve the above problem, a packet processing method and apparatus, a device, a storage medium, and a program product are provided in embodiments of the present application. The packet processing method enables event processing on the packet receiving side, so that the packet receiving side supports a programmable congestion control framework and has event reporting and response capabilities, thereby effectively improving the scalability of the processing algorithms corresponding to the packet processing events.

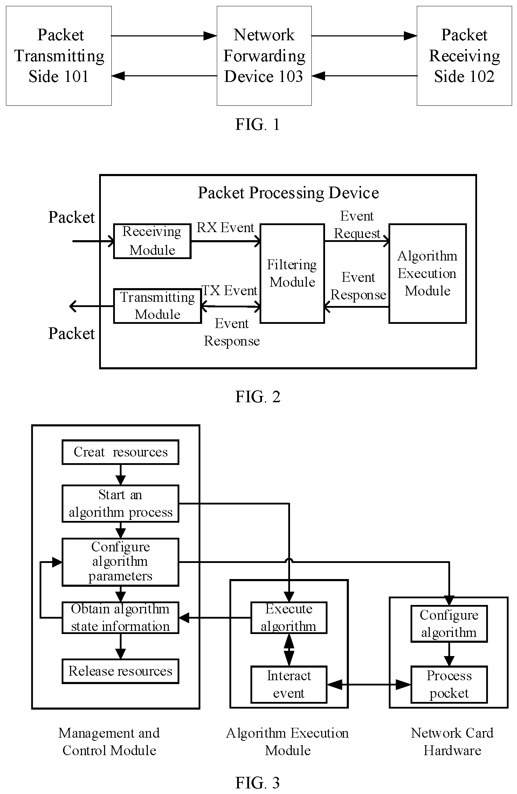

The packet processing method provided by the embodiment of the present application can be applied to the application environment shown in FIG. 1. As shown in FIG. 1, to-be-processed packets are transmitted between two packet processing devices. One packet processing device is a packet transmitting side 101 (or called a source side), and the other packet processing device is a packet receiving side 102 (or called a destination side). The packet transmitting side 101 transmits a to-be-processed packet, which is forwarded by a network forwarding device 103 to the packet receiving side 102. Subsequently, the packet receiving side 102 processes the to-be-processed packet, generates event response information, and feeds it back to the packet transmitting side 101 through the network forwarding device 103.

The to-be-processed packet transmitted by the packet transmitting side 101 may include a data packet and a probe request packet. The probe request packet includes, but is not limited to, an RTT probe request, a network telemetry information (telemetry, e.g., in-band network telemetry (INT) or in-band flow analyzer (IFA)) probe request, a bandwidth probe request, a window probe request, a credit probe request, and a token probe request.

The event response information transmitted by the packet receiving side 102 may be an acknowledgment (ACK) packet, a negative acknowledgment (NAK) packet, a CNP, an explicit congestion notification echo (ECN-Echo) packet, and a probe response packet. The probe response packet includes, but is not limited to, an RTT probe response, a network telemetry information probe response, a bandwidth probe response, a window probe response, a credit probe response, and a token probe response.

In some embodiments, the probe request packet and the probe response packet can be implemented in an in-band or out-of-band form. The in-band form may refer to a probe request packet header being carried in a data packet, and the out-of-band form may refer to the probe request packet being an independent packet.

It should be understood that, in the present application, any packet processing device can serve as both a packet transmitting side and a packet receiving side. For example, the same packet processing device can serve as a packet transmitting side when transmitting a to-be-processed packet and as a packet receiving side when receiving a to-be-processed packet.

FIG. 2 is a schematic diagram illustrating a structure of a packet processing device provided by an embodiment of the present application. As shown in FIG. 2, the packet processing device includes a receiving module, a transmitting module, a filtering module, and an algorithm execution module. The filtering module is respectively connected to the receiving module, the transmitting module, and the algorithm execution module.

After receiving a to-be-processed packet, the receiving module can perform corresponding processing based on a packet type to trigger a packet processing event. The packet processing event that can be triggered by the receiving module can be a receive (RX) event. Similarly, the transmitting module can also trigger a packet processing event. The packet processing event that can be triggered by the transmitting module can be a transmit (TX) event.

For example, Table 1 is a classification table of packet processing events provided by an embodiment of the present application. As shown in Table 2, when the packet processing device serves as the packet transmitting side or the packet receiving side, it can trigger different packet processing events.

**Table 2**

| Packet processing event type | Packet processing event |
|---|---|
| Transmitting side + TX | New flow event |
| | Packet transmitted event |
| | RTT probe packet transmitted event |
| | Network telemetry probe packet transmitted event |
| | Bandwidth probe packet transmitted event |
| | Window probe packet transmitted event |
| | Source side token request event |
| | Token probe packet transmitted event |
| | Credit probe packet transmitted event |
| | Timeout event |
| Transmitting side + RX | Packet reception acknowledgment event |
| | Unexpected packet acknowledgment event |
| | Congestion notification packet event |
| | ECN echo packet event |
| | RTT probe response packet reception event |
| | Network telemetry information probe response packet reception event |
| | Bandwidth probe response packet reception event |
| | Window probe response packet reception event |
| | Token probe response packet reception event |
| | Credit probe response packet reception event |
| Receiving side + TX | Bandwidth probe response packet transmitting event |
| | Window probe response packet transmitting event |
| | Token probe response packet transmitting event |
| | Credit probe response packet transmitting event |
| Receiving side + RX | Data packet reception event |
| | Bandwidth probe request packet reception event |
| | Window probe request packet reception event |
| | Token probe request packet reception event |
| | Credit probe request packet reception event |

As shown in Table 2, when the packet processing device serves as the packet transmitting side, the transmitting module can trigger a new flow event, a packet transmitted event, an RTT probe packet transmitted event, a network telemetry probe packet transmitted event, a bandwidth probe packet transmitted event, a window probe packet transmitted event, a source side token request event, a token probe packet transmitted event, a credit probe packet transmitted event, and a timeout event. When the packet processing device serves as the packet transmitting side, the receiving module can trigger a packet reception acknowledgment event, an unexpected packet acknowledgment event, a congestion notification packet event, an ECN echo packet event, an RTT probe response packet reception event, a network telemetry information probe response packet reception event, a bandwidth probe response packet reception event, a window probe response packet reception event, a token probe response packet reception event, and a credit probe response packet reception event.

Continuing to refer to Table 2, when the packet processing device serves as the packet receiving side, the transmitting module can trigger a bandwidth probe response packet transmitting event, a window probe response packet transmitting event, a token probe response packet transmitting event, and a credit probe response packet transmitting event. When the packet processing device serves as the packet receiving side, the receiving module can trigger a data packet reception event, a bandwidth probe request packet reception event, a window probe request packet reception event, a token probe request packet reception event, and a credit probe request packet reception event.

Various to-be-processed packets involved in the embodiments of the present application are described below.

The new flow event is configured to initialize algorithm parameters and perform a first configuration of the transmitting module. The main data field included in the new flow event is an event timestamp (timestamp), and the granularity is constrained by the algorithm parameters. For example, the event timestamp can be 1 nanosecond (ns).

In some embodiments, the new flow event is reported immediately after a flow or queue pair (QP) is successfully established. In other embodiments, the new flow event can also be reported when a created flow has no packet to transmit for a period exceeding a certain threshold.

The packet transmitted event is configured to update a transmitting window and a number of in-flight packets. The main data fields included in the packet transmitted event are an event timestamp and a number of transmitted packets, and the granularity is constrained by the algorithm parameters. For example, the granularity of the event timestamp can be 1 ns, and the granularity of the number of transmitted packets can be 1 B or 1 packet.

In some embodiments, when the transmitting module transmits a certain amount of packets and cannot transmit new packets due to algorithm response value or configuration constraints, the transmitting module reports a packet transmitted event.

The RTT probe packet transmitted event is configured to notify the algorithm execution module that RTT transmission probe has been performed, avoiding unnecessary repeated probing. The main data field included in the RTT probe packet transmitted event is an event timestamp, and the granularity is constrained by the algorithm parameters. For example, the granularity of the event timestamp can be 1 ns.

In some embodiments, when the transmitting module completes transmitting an RTT probe packet, the transmitting module reports an RTT probe packet transmitted event.

The network telemetry probe packet transmitted event is configured to notify the algorithm execution module that network telemetry transmission probe has been performed, avoiding unnecessary repeated probing. The main data field included in the network telemetry probe packet transmitted event is an event timestamp, and the granularity is constrained by the algorithm parameters. For example, the granularity of the event timestamp is 1 ns.

In some embodiments, when the transmitting module completes transmitting a network telemetry probe packet, the transmitting module reports a network telemetry probe packet transmitted event. The network telemetry may be in the form of in-band network telemetry (INT) or in-band flow analyzer (IFA) technology.

The bandwidth probe packet transmitted event is configured to notify the algorithm module that bandwidth transmission probe has been performed, avoiding unnecessary repeated probing. The main data field included in this event is an event timestamp, and the granularity is constrained by the algorithm parameters. For example, the granularity of the event timestamp is 1 ns.

In some embodiments, when the transmitting module completes transmitting a bandwidth probe packet, the transmitting module reports a bandwidth probe packet transmitted event.

The window probe packet transmitted event is configured to notify the algorithm module that window transmission probe has been performed, avoiding unnecessary repeated probing. The main data field included in the window probe packet transmitted event is an event timestamp, and the granularity is constrained by the algorithm parameters. For example, the granularity of the event timestamp is 1 ns.

In some embodiments, when the transmitting module completes transmitting a window probe packet, the transmitting module reports a window probe packet transmitted event.

The source side token request event is configured to request the algorithm execution module to issue new tokens to support the transmitting module to continue performing transmitting tasks. The main data field included in the source side token request event is an event timestamp, and the granularity is constrained by the algorithm parameters. For example, the granularity of the event timestamp is 1 ns.

In some embodiments, when the transmitting module transmits a packet based on a token mode and schedules the present flow for a transmitting task but has no available tokens, the transmitting module reports a source side token request event.

The token probe packet transmitted event is configured to notify the algorithm module that token transmission probe has been performed, avoiding unnecessary repeated probing. The main data field included in this event is an event timestamp, and the granularity is constrained by the algorithm parameters. For example, the granularity of the event timestamp is 1 ns.

In some embodiments, when the transmitting module completes transmitting a token probe packet, the transmitting module reports a token probe packet transmitted event.

The credit probe packet transmitted event is configured to notify the algorithm execution module that token transmission probe has been performed, avoiding unnecessary repeated probing. The main data field included in this event is an event timestamp, and the granularity is constrained by the algorithm parameters. For example, the granularity of the event timestamp is 1 ns.

In some embodiments, when the transmitting module completes transmitting a credit probe packet, the transmitting module reports a credit probe packet transmitted event. In other embodiments, at an algorithm level, the token probe packet transmitted event can be directly used to refer to the credit probe packet transmitted event.

The timeout event is configured to notify the algorithm execution module of potential packet loss information, so that it constrains subsequent packet transmitting action by generating a corresponding event response. The main data field included in this event is an event timestamp, and the granularity is constrained by the algorithm parameters. For example, the granularity of the event timestamp is 1 ns.

In some embodiments, when the transmitting module detects that a transmitted data packet has not received an acknowledgment within a certain period, the transmitting module can retransmit the packet and report a timeout event. The certain period can be a set time (retransmission timeout, RTO).

The packet reception acknowledgment event is configured to update the transmitting window and the number of in-flight packets. The main data fields included in this event are an event timestamp and a number of acknowledged received packets (referred to as pkt_ack_num), and the granularity is constrained by the algorithm parameters. For example, the granularity of the event timestamp is 1 ns, and the granularity of the number of acknowledged received packets is 1 B or 1 packet.

In some embodiments, when the receiving module on the source side receives an ACK packet transmitted by the transmitting module on the destination side, the receiving module reports a packet reception acknowledgment event.

The unexpected packet acknowledgment event is configured to notify the algorithm execution module of potential packet loss information, so that it constrains subsequent packet transmitting action by generating a corresponding event response. The main data fields included in this event are an event timestamp and a number of unexpected packet acknowledgments (referred to as pkt_nak_num), and the granularity is constrained by the algorithm parameters. For example, the granularity of the event timestamp is 1 ns, and the granularity of the number of unexpected packet acknowledgments is 1 B or 1 packet.

In some embodiments, when the receiving module on the destination side receives a packet with an out-of-order packet sequence number (PSN), it triggers the transmitting module to transmit a NAK packet. The receiving module on the source side reports an unexpected packet acknowledgment event after receiving the NAK packet. On a condition that selective retransmission is supported, the NAK signal may include a selective ACK (SACK) sub-signal.

The congestion notification packet event is configured to notify the algorithm execution module of potential congestion information, so that it constrains subsequent packet transmitting action by generating a corresponding event response. The main data fields included in this event are an event timestamp and an aggregated CNP number (referred to as cnp_num), and the granularity is constrained by the algorithm parameters. For example, the granularity of the event timestamp is 1 ns, and the granularity of the aggregated CNP number is 1 packet.

In some embodiments, after receiving a packet marked with explicit congestion notification (ECN) congestion experienced (CE) by the network forwarding device, the receiving module on the destination side can perform filtering based on an ECN filtering configuration parameter. On a condition that a filtering condition is satisfied, the receiving module triggers the transmitting module to transmit a CNP. The receiving module on the source side reports a congestion notification packet event after receiving the CNP. The ECN CE is represented by 11 bits.

The ECN echo packet event is configured to notify the algorithm execution module of potential congestion information, so that it constrains subsequent packet transmitting action by generating a corresponding event response. The main data fields included in this event are an event timestamp and an aggregated ECN-Echo packet number (referred to as ece_num), and the granularity is constrained by the algorithm parameters. For example, the granularity of the event timestamp is 1 ns, and the granularity of ece_num is 1 packet.

In some embodiments, after receiving a packet marked with ECN CE by the network forwarding device, the receiving module on the destination side triggers the transmitting module to transmit an ECN-Echo packet. The receiving module on the source side reports an ECN echo packet event after receiving the ECN-Echo packet.

The RTT probe response packet reception event is configured to notify the algorithm execution module of a presently probed RTT size, for updating algorithm runtime state information, so that the algorithm execution module adjusts subsequent packet transmitting action by generating a corresponding event response. The main data fields included in this event are a probe request transmitting timestamp (referred to as ts_rtt_req_sent), a request receiving timestamp (referred to as ts_rtt_req_recv), a response transmitting timestamp (referred to as ts_rtt_rsp_sent), and a response receiving timestamp (referred to as ts_rtt_rsp_recv), and the granularity is constrained by the algorithm parameters.

In some embodiments, the filtering module can further reduce the above four data fields to two, including: rtt_fabric and rtt_host, calculated as rtt_host = ts_rtt_rsp_sent - ts_rtt_req_recv, rtt_fabric = ts_rtt_rsp_recv - ts_rtt_req_sent - rtt_host. For example, the granularity of the above data fields is 1 ns.

In some embodiments, the receiving module on the source side reports an RTT probe response packet reception event after receiving an RTT probe response packet transmitted by the transmitting module on the destination side.

The network telemetry information probe response packet reception event is configured to notify the algorithm execution module of presently probed network telemetry information, for updating algorithm runtime state information, so that the algorithm execution module adjusts subsequent packet transmitting action by generating a corresponding event response. The main data fields included in this event are a valid telemetry number (referred to as valid_telemetry_num) and a telemetry data information array (referred to as telemetry_data). Each piece of telemetry data information includes, but is not limited to: a number of TX forwarded bytes (referred to as tx_bytes), a TX timestamp (referred to as tx_timestamp), and a buffer queue length (referred to as queue_length). The granularity of the above data fields is constrained by the configuration of the network forwarding device. For example, the granularity of tx_bytes is 1 B, the granularity of tx_timestamp is 1 ns, and the granularity of queue_length is 256 B.

In some embodiments, the receiving module on the source side reports a network telemetry information probe response packet reception event after receiving a network telemetry information probe response packet transmitted by the transmitting module on the destination side.

The bandwidth probe response packet reception event is configured to notify the algorithm execution module of a presently probed available bandwidth size, for updating an algorithm rate, so that the algorithm execution module adjusts subsequent packet transmitting action by generating a corresponding event response. The main data fields included in this event are an event timestamp and a probe bandwidth size (referred to as probe_bw), and the granularity is constrained by the algorithm parameters. For example, the granularity of timestamp is 1 ns, and the granularity of probe_bw is 1 MB/s.

In some embodiments, the receiving module on the source side reports this event after receiving a bandwidth probe response packet transmitted by the transmitting module on the destination side.

The window probe response packet reception event is configured to notify the algorithm execution module of a presently probed available window size, for updating a congestion window of the algorithm, so that the algorithm execution module adjusts subsequent packet transmitting action by generating a corresponding event response. The main data fields included in this event are an event timestamp and a probe window size (referred to as probe_wnd), and the granularity is constrained by the algorithm parameters. For example, the granularity of timestamp is 1 ns, and the granularity of probe_wnd is 1 B or 1 packet.

In some embodiments, the receiving module on the source side reports a window probe response packet reception event after receiving a window probe response packet transmitted by the transmitting module on the destination side.

The token probe response packet reception event is configured to notify the algorithm execution module of a presently probed available token size, for updating a token count of the algorithm, so that the algorithm execution module adjusts subsequent packet transmitting action by generating a corresponding event response. The main data fields included in this event are an event timestamp and a probe token size (referred to as probe_token), and the granularity is constrained by the algorithm parameters. Typically, the granularity of timestamp is 1 ns, and the granularity of probe_token is 1 B or 1 packet.

In some embodiments, the receiving module on the source side reports a token probe response packet reception event after receiving a token probe response packet transmitted by the transmitting module on the destination side.

The credit probe response packet reception event is configured to notify the algorithm execution module of a presently probed available token size, for updating a token count of the algorithm, so that the algorithm execution module adjusts subsequent packet transmitting action by generating a corresponding event response. The main data fields included in this event are an event timestamp and a probe credit size (referred to as probe_credit), and the granularity is constrained by the algorithm parameters. Typically, the granularity of timestamp is 1 ns, and the granularity of probe_credit is 1 B or 1 packet.

In some embodiments, at an algorithm level, the token probe response packet reception event can be directly used to refer to the credit probe response packet reception event.

In some embodiments, the receiving module on the source side reports a credit probe response packet reception event after receiving a credit probe response packet transmitted by the transmitting module on the destination side.

The bandwidth probe response packet transmitting event is configured to notify the algorithm execution module that a bandwidth probe response has been performed, avoiding unnecessary repeated responses within a certain period. The main data field included in this event is an event timestamp, and the granularity is constrained by the algorithm parameters. For example, the granularity of timestamp is 1 ns.

In some embodiments, the transmitting module on the destination side reports a bandwidth probe response packet transmitting event after transmitting a bandwidth probe response packet.

The window probe response packet transmitting event is configured to notify the algorithm execution module that a window probe response has been performed, avoiding unnecessary repeated responses within a certain period. The main data field included in this event is an event timestamp, and the granularity is constrained by the algorithm parameters. For example, the granularity of timestamp is 1 ns.

In some embodiments, the transmitting module on the destination side reports a window probe response packet transmitting event after transmitting a window probe response packet.

The token probe response packet transmitting event is configured to notify the algorithm execution module that a token probe response has been performed, avoiding unnecessary repeated responses within a certain period. The main data field included in this event is an event timestamp, and the granularity is constrained by the algorithm parameters. For example, the granularity of timestamp is 1 ns.

In some embodiments, the transmitting module on the destination side reports a token probe response packet transmitting event after transmitting a token probe response packet.

The credit probe response packet transmitting event is configured to notify the algorithm execution module that a credit probe response has been performed, avoiding unnecessary repeated responses within a certain period. The main data field included in this event is an event timestamp, and the granularity is constrained by the algorithm parameters. For example, the granularity of timestamp is 1 ns. Optionally, at an algorithm level, the token probe response packet transmitting event can be directly used to refer to the credit probe response packet transmitting event.

The data packet reception event is configured to update algorithm runtime state information on the destination side to support responding to various probe events transmitted by the source side. The main data fields included in this event are an event timestamp and a number of received packets (referred to as pkt_recv_num), and the granularity is constrained by the algorithm parameters. For example, the granularity of timestamp is 1 ns, and the granularity of pkt_recv_num is 1 B or 1 packet.

In some embodiments, when the receiving module on the destination side receives a data packet transmitted by the transmitting module on the source side, the receiving module reports a data packet reception event.

The bandwidth probe request packet reception event is configured to trigger the algorithm on the destination side to calculate an available bandwidth size to generate a bandwidth probe response. The main data field included in this event is an event timestamp, and the granularity is constrained by the algorithm parameters. For example, the granularity of timestamp is 1 ns.

In some embodiments, when the receiving module on the destination side receives a bandwidth probe request packet transmitted by the transmitting module on the source side, the receiving module reports a bandwidth probe request packet reception event.

The window probe request packet reception event is configured to trigger the algorithm on the destination side to calculate an available window size to generate a window probe response. The main data field included in this event is an event timestamp, and the granularity is constrained by the algorithm parameters. For example, the granularity of timestamp is 1 ns.

In some embodiments, when the receiving module on the destination side receives a window probe request packet transmitted by the transmitting module on the source side, the receiving module reports a window probe request packet reception event.

The token probe request packet reception event is configured to trigger the algorithm on the destination side to calculate an available token size to generate a token probe response. The main data field included in this event is an event timestamp, and the granularity is constrained by the algorithm parameters. For example, the granularity of timestamp is 1 ns.

In some embodiments, when the receiving module on the destination side receives a token probe request packet transmitted by the transmitting module on the source side, the receiving module reports the token probe request packet reception event.

The credit probe request packet reception event is configured to trigger the algorithm on the destination side to enable a credit distribution mechanism to generate a credit probe response for a present or subsequent event. The main data field included in this event is an event timestamp, and the granularity is constrained by the algorithm parameters. For example, the granularity of timestamp is 1 ns. Optionally, at an algorithm level, the token probe request packet reception event can be directly used to refer to the credit probe request packet reception event.

In some embodiments, when the receiving module on the destination side receives a credit probe request packet transmitted by the transmitting module on the source side, the receiving module reports a credit probe request packet reception event.

Continuing to refer to FIG. 2, the filtering module is configured to collect initial information from the transmitting module and the receiving module, filter out unenabled events based on preset event enabling information set by a user, and perform preprocessing on the initial information of the enabled events to generate event information of the filtered packet processing event.

The preprocessing includes at least one of: calculation processing, cropping processing, merging processing, or discarding processing.

The algorithm execution module is configured to execute, based on the event information reported by the filtering module, a processing algorithm of the filtered packet processing event to obtain event response information, and transmit, through the filtering module, the event response information to the transmitting module.

In some embodiments, before transmitting the event response information returned by the algorithm execution module to the transmitting module, the filtering module can also perform appropriate conversion processing similar to the above preprocessing.

In some embodiments, the transmitting module can adjust the packet transmitting action based on the event response information. It should be understood that the embodiments of the present application do not limit how the transmitting module adjusts the packet transmitting action. In some embodiments, adjusting the packet transmitting action may include changing a transmitting rate or a transmitting window size, changing a transmitting path priority, transmitting a probe request or response packet, etc.

Continuing to refer to FIG. 2, when the two packet processing devices transmit the to-be-processed packet, the transmission can be performed through a network forwarding device. In some embodiments, when forwarding the to-be-processed packet, the network forwarding device can add congestion flag information and/or network telemetry information to the to-be-processed packet.

For example, the congestion flag information can be an ECN flag, where an ECN flag of 1 indicates congestion, and an ECN flag of 0 indicates no congestion. The network telemetry information can be network telemetry metadata. For example, the network forwarding device can be a switch, a router, or the like.

How to execute the processing algorithm of the filtered packet processing event based on the event information to obtain the event response information is described below.

In some embodiments, the packet processing device further includes a management and control module. The management and control module can first create processing resources of the filtered packet processing event and start an algorithm process in the algorithm execution module through hot upgrade. Subsequently, the algorithm execution module executes the processing algorithm of the filtered packet processing event in the algorithm process based on an algorithm parameter and the event information to obtain the event response information.

The processing resources are resources used by the algorithm process during operation, and can include a local storage space on a host for a binary algorithm file corresponding to the processing algorithm, a congestion control queue (CCQ), etc.

FIG. 3 is a flow diagram illustrating an operation process of a PCC framework endpoint provided by an embodiment of the present application. As shown in FIG. 3, the management and control module is responsible for control plane tasks, and the algorithm processing module is responsible for data plane tasks. The management and control module runs on a host side or can also run on a DPU side. On a condition that the management and control module runs on the host side, the packet processing device can be a server with a DPU. On a condition that the management and control module runs on the DPU side, the packet processing device can be the DPU itself.

The management and control module can first create resources, interact with the algorithm execution module, and thereby start the algorithm process through hot upgrade. Subsequently, the algorithm execution module executes the processing algorithm of the filtered packet processing event in the algorithm process based on the algorithm parameter and the event information to obtain the event response information.

It should be understood that the embodiments of the present application do not limit how to start the algorithm process through hot upgrade. In some embodiments, the management and control module can store a compilation file corresponding to the processing algorithm in a target storage location, so that a processor of the packet processing device starts the algorithm process by obtaining and loading the compilation file from the target storage location.

The processor of the packet processing device, or the packet processing device itself, can be a DPU, and the DPU may include a system on a chip (SoC). The compilation file can be a compiled binary algorithm code file, and the target storage location can be a specified location in a file system path.

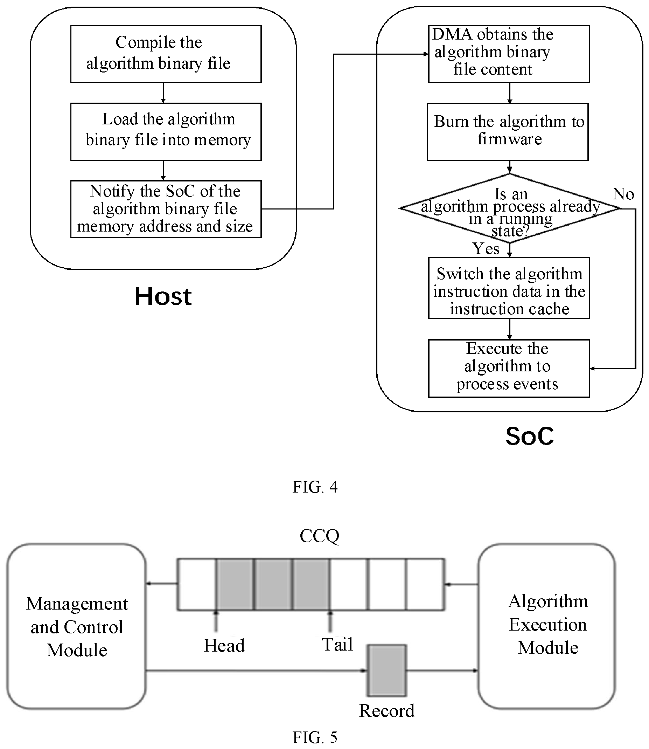

For example, FIG. 4 is a flow diagram illustrating algorithm hot upgrade provided by an embodiment of the present application. As shown in FIG. 4, PCC hot upgrade is triggered at the moment when the management and control module executes the action of starting the algorithm process. When the management and control module on the host side executes the action of starting the algorithm process, the management and control module loads a compiled binary algorithm code file from a file system path specified by a function parameter into a specific location in a host memory, and notifies an SoC of the memory address and size. After receiving the memory address and size of the stored algorithm file, the SoC reads the content of the binary algorithm code file through a direct memory access operation and obtains it into a local memory of the SoC.

Subsequently, the SoC records the binary algorithm code file into firmware to persist the algorithm version. The SoC determines whether an algorithm process is presently running. If yes, the SoC loads a new algorithm from the firmware, switches algorithm instruction data in an instruction cache to the new algorithm instruction data, and then executes a subsequent process to start the algorithm process.

In some embodiments, the switching scheme uses a dual instruction cache mechanism. The new algorithm instruction data does not overwrite the presently running algorithm instruction data, but is placed in a standby instruction cache. Only after the new algorithm instruction data is completely loaded, the SoC switches to the standby instruction cache, making it the default instruction cache, and the original instruction cache is downgraded to the standby instruction cache. On a condition that no algorithm process is running, the binary algorithm code file is directly loaded into the default instruction cache to execute the algorithm process. Subsequent events are all processed by the new algorithm process, and a response is generated and returned to the packet processing module. Finally, the SoC also needs to burn the algorithm binary file into the firmware to persist the algorithm version.

In some embodiments, on a condition that the management and control module specifies the algorithm binary file as a null value (NULL) when starting the algorithm, the subsequent hot upgrade action may not be executed, and the present algorithm process may be used directly, or a binary algorithm code file in a default path (if any) may be used to execute the subsequent hot upgrade action.

In the present application, based on a hot upgrade mechanism, non-perceptive algorithm switching is supported, minimizing the impact on service traffic. Moreover, the algorithm switching is executed when the management and control module loads the algorithm, without requiring other cumbersome configuration steps, minimizing the user's learning and management costs.

It should be understood that the embodiments of the present application do not limit the algorithm parameter. In some embodiments, when starting the algorithm process, a default algorithm parameter configuration can be used first, and the configuration of the related algorithm parameter can also be adjusted in real time after the algorithm is running.

After modifying the configuration of the algorithm parameter, the configuration takes effect on the network card hardware and affects an event reporting action.

How the management and control module adjusts the algorithm parameter is described below.

In some embodiments, the management and control module obtains, through a congestion control queue, a congestion control entry of the algorithm execution module when executing the processing algorithm. The congestion control entry includes algorithm state information of the processing algorithm. Subsequently, the management and control module adjusts the algorithm parameter based on the algorithm state information.

The congestion control entry (CCE) is a data structure customized by the user when implementing the algorithm code. The embodiments of the present application do not limit the size or data structure of the CCE. For example, the size of the CCE data structure can be 32 B, and the CCE data structure can be as shown in Table 3.

**Table 3**

| Field name | Field meaning |
|---|---|
| flow_id | ID flow identifier, identifying a globally unique flow on an endpoint |
| max_rtt | Maximum RTT probed by the algorithm process (valid only when the RTT event is enabled) |
| min_rtt | Minimum RTT probed by the algorithm process (valid only when the RTT event is enabled) |
| owner | Flag bit, the algorithm flips this bit each time it writes to the CCE |
| data | Other user-defined data fields |

For example, FIG. 5 is a s schematic diagram illustrating an interaction of a management and control module and an algorithm execution module provided by an embodiment of the present application. As shown in FIG. 5, a congestion control queue (CCQ) can be a first-in-first-out queue implemented based on a CCE structure array, logically abstracted as a ring buffer, located in a host memory. A head pointer (Head) and a tail pointer (Tail) both move forward (to the right in FIG. 5). On a condition that the present head or tail pointer moves to the end of the queue, it moves to the head of the queue next. In an initial state, both the head and tail pointers point to the first CCE element at the head of the queue. A record is a pre-allocated fixed-size buffer for storing head pointer information, also located in the host memory.

In some embodiments, the algorithm execution module creates a congestion control entry. Subsequently, the algorithm execution module determines whether the congestion control queue is in a full queue state based on head pointer information and tail pointer information of the congestion control queue. On a condition that the congestion control queue is not in the full queue state, the algorithm execution module adds the congestion control entry to a tail of the congestion control queue and flips flag information of the congestion control queue. Finally, the management and control module obtains the congestion control entry in the congestion control queue based on the flag information and updates the head pointer information of the congestion control queue.

For example, each time the algorithm process completes an event processing, it creates a new CCE structure instance, populates fields, attempts to add the CCE to the tail of the CCQ, and flips the flag information (e.g., a CCE owner flag bit). Only when the CCQ queue is not full, the algorithm execution module can successfully add the CCE to the CCQ and update the tail pointer, moving it forward by one position. The algorithm execution module can obtain the latest head pointer information from the record buffer and compare it with the tail pointer to determine whether the queue is full.

For example, the management and control process can periodically poll, or directly poll the CCE pointed to by the head pointer in the CCQ. On a condition that the owner flag bit in the CCE has flipped, it determines that the CCE is valid data. The management and control module obtains this data for analysis and moves the head pointer forward by one position. Finally, the management and control process also needs to update the record with the head pointer information (e.g., based on an offset size) so that the algorithm process can calculate whether new CCE elements can be placed into the CCQ queue.

The flipping of the flag information of the congestion control queue can be from 0 to 1, or from 1 to 0.

It should be understood that the embodiments of the present application do not limit how to adjust the algorithm parameter based on the algorithm state information. In some embodiments, an artificial intelligence model such as machine learning or deep learning can be used to adaptively adjust the algorithm parameter based on the algorithm state information included in the CCE, thereby achieving a better congestion control effect.

In some embodiments, on a condition that the algorithm state information is abnormal, the management and control module releases the processing resources of the filtered packet processing event and exits the algorithm process.

In the present application, the management and control module can obtain, through the congestion control queue, the congestion control entry of the algorithm execution module when executing the processing algorithm, thereby obtaining the algorithm state information, adjust the algorithm parameter based on the algorithm state information, configure it to the network card hardware, and then constrain the hardware event reporting action and update the algorithm action through the algorithm parameter. In this way, it can support users in designing more intelligent algorithms.

The algorithm parameter involved in the embodiments of the present application is described below.

In some embodiments, the algorithm parameter includes a granularity configuration parameter, an event enabling parameter, a feedback enabling parameter, an algorithm execution parameter, and a hardware configuration parameter. Through the above algorithm parameter, the event reporting action of the hardware, the packet transmitting action, and the algorithm execution action can be influenced.

The granularity configuration parameter is configured to determine the basic unit of each data field for event reporting and response. For example, Table 4 is a schematic table of granularity configuration parameters provided by an embodiment of the present application. The schematic table of granularity configuration parameters includes information such as parameter names of the granularity configuration parameters.

**Table 4**

| Parameter name | Parameter meaning | Typical configuration value |
|---|---|---|
| ts_unit | Basic unit of timestamp | 1ns |
| pkt_mode | Whether to use packet mode | 1 (use packet mode) |
| pkt_unit | Basic unit of packet size | 1 B (packet mode not enabled); and 1 packet (packet mode enabled) |
| bw_unit | Basic unit of rate | 1MB/s |
| event_unit | Unit of CNP/ECN event count | 1 event |

It should be noted that on a condition that the packet processing event is a network telemetry probe packet transmitted event, the granularity of the field depends on the configuration of the network forwarding device and is not constrained by the above granularity configuration parameter.

The event enabling parameter is configured to configure the enablement of event signals. Only when a certain event signal is enabled can the algorithm module receive the corresponding event information reported by the hardware, and the transmitting module or the receiving module can process the probe request or response of the corresponding event.

In some embodiments, the event enabling parameter can be set as a 32-bit data field (referred to as enable_event), where each bit corresponds to the enabling status of one event. A bit of 1 indicates enabled, and a bit of 0 indicates disabled, so that multiple events can be enabled simultaneously.

In some embodiments, a 32-bit event discard enabling data field (referred to as drop_event) can be set, where each bit corresponds to the discardable configuration of one event. A bit of 1 indicates discardable, and a bit of 0 indicates not discardable. Only when a certain event is enabled, it is necessary to pay attention to the discardable type corresponding to that event.

The feedback enabling parameter is an algorithm feedback configuration parameter, which is configured to require the hardware to perform a packet transmitting action in a certain form. The feedback enabling parameter may include a multi-path enabling parameter (referred to as multi_path_enable) and a packet transmitting mode parameter (referred to as packet_send_mode). The multi-path enabling parameter indicates whether to use multiple available network paths for packet transmitting. On a condition that the multi-path enabling parameter is enabled, different packets of the same flow can use different network paths. On a condition that the multi-path enabling parameter is not enabled, all packets of the same flow use only one fixed (default) network path. The packet transmitting mode parameter indicates how the hardware controls the speed or quantity of transmitting packets on a single network path. For example, the packet transmitting mode includes a rate-based transmitting mode, a window-based transmitting mode, a token-based transmitting mode, or a credit-based transmitting mode.

In some embodiments, through the above multi-path enabling parameter, multi-path packet transmitting by the hardware is supported. The transmitting module adjusts the packet transmitting action based on the priority and the packet transmitting mode of the network path for each packet transmission.

For example, through the multi-path enabling parameter, when multi-path support is enabled, the algorithm execution module can constrain the packet transmitting speed or quantity of multiple paths in response to any event. The algorithm module feedback includes the priority and the packet transmitting mode of each network path. The packet transmitting task is executed based on the corresponding priority and packet transmitting mode of each path.

For example, the transmitting module first uses the network path with the highest priority to transmit packets until that path does not satisfy the packet transmitting condition, then uses the next best network path to transmit packets, and so on. When no network path can transmit packets any longer, the present flow needs to be suspended to wait for the next scheduling.

In some embodiments, in the rate-based transmitting mode, the transmitting module constrains packet transmitting based on the rate value fed back by the algorithm execution module.

For example, in the rate-based transmitting mode, the transmitting module can convert the rate into a packet transmitting interval, and after transmitting the previous packet (or packet segment), it is required to wait for the calculated time interval before transmitting the next packet (or packet segment).

For example, in the rate-based transmitting mode, the transmitting module can also convert the rate into tokens, according the formula: token = rate * interval, and then constrain packet transmitting based on the token mode, where rate is the transmitting rate, interval is the interval time between two transmitting schedules, and token is the number of available tokens.

For example, in the rate-based transmitting mode, the packet transmitting side can determine the transmitting rate size (i.e., the packet receiving side informs the packet transmitting side of the transmitting rate size to be adjusted next time) based on the driving of the packet receiving side. The following events need to be enabled: bandwidth probe packet transmitted event, bandwidth probe response packet reception event, bandwidth probe response packet transmitting event, bandwidth probe request packet reception event. That is, the packet transmitting side periodically performs bandwidth probing based on an instruction of the algorithm execution module, to wait for a bandwidth probe response packet transmitted back by the packet receiving side, and returns a value included in the response packet to the transmitting module to set the transmitting rate size.

In some embodiments, in the window-based transmitting mode, the transmitting module constrains the number of in-flight packets based on the congestion window value fed back by the algorithm execution module. A new packet can be transmitted only when the number of in-flight packets is less than the present congestion window size. Otherwise, the present flow needs to be suspended to wait for the next schedule. After an ACK packet updates the in-flight packet size or the algorithm module feeds back a larger congestion window value, transmitting packets can be continued.

For example, the window mode can be implemented by being driven by the packet receiving side (i.e., the packet receiving side informs the packet transmitting side of the window size to be adjusted next time). The following events need to be enabled: window probe packet transmitted event, window probe response packet reception event, window probe response packet transmitting event, window probe request packet reception event. That is, the transmitting side periodically performs window probing based on an instruction of the algorithm execution module, to wait for a window probe response packet transmitted back by the receiving side, and returns a value included in the response packet to the transmitting module to set the congestion window size.

In some embodiments, in the token-based transmitting mode, the transmitting module constrains packet transmitting based on the token value fed back by the algorithm execution module. The transmitting module can execute packet transmitting only when there are available tokens and the token size is greater than the size of the packet to be transmitted. On a condition that the token size is insufficient, it needs to report a source side token request event to request the algorithm execution module to issue new available tokens. On a condition that the newly issued tokens still do not satisfy the packet transmitting condition, the present flow needs to be suspended to wait for the next schedule. The algorithm execution module responds with token issuance only upon receiving a source side token request event, and does not issue tokens in response to other event requests.

For example, the token mode can be implemented by being driven by the receiving side (i.e., the packet receiving side informs the packet transmitting side of the token size to be adjusted next time). The following events need to be enabled: token probe packet transmitted event, token probe response packet reception event, token probe response packet transmitting event, token probe request packet reception event. That is, the transmitting side periodically performs token probing based on an instruction of the algorithm execution module, to wait for a token probe response packet transmitted back by the receiving side, and returns a value included in the response packet to the transmitting module to add the value to the available token size.

In some embodiments, in the credit-based transmitting mode, the transmitting module constrains packet transmitting based on the credit value fed back by the algorithm execution module. Similar to the token mode, the transmitting module can execute packet transmitting only when there are available credit values and the credit is greater than the size of the packet to be transmitted. When the credit is insufficient, the present flow needs to be suspended to wait for the next schedule.

For example, there are two main differences between the credit-based transmitting mode and the token-based transmitting mode. First, in the credit-based transmitting mode, the source side needs to wait for the destination side to authorize a credit value before transmitting a packet, whereas the token mode does not have this constraint, allowing calculation on either the source side or the destination side. Second, in the credit-based transmitting mode, the algorithm execution module can respond with credit authorization (i.e., credit issuance) upon receiving any event. The transmitting module needs to accumulate the effective response credit values to limit the number of packets transmitted. However, in the token mode, new available tokens are obtained only after initiating a token request to the algorithm module.

For example, the credit mode can be implemented by being driven by the receiving side (i.e., the packet receiving side informs the packet transmitting side of the credit value to be adjusted next time). The following events need to be enabled: credit probe packet transmitted event, credit probe response packet reception event, credit probe response packet transmitting event, credit probe request packet reception event. That is, the transmitting side first transmits a credit probe request packet and then waits for multiple credit probe response packets subsequently transmitted back by the receiving side, and returns a value included in the response packets to the transmitting module to add the value to the available credit size.

For example, at an algorithm level, event signals related to the token mode can be used to refer to signals related to the credit mode and implement the credit mode. For example, the above working modes only constrain the transmitting action of data packets, and do not constrain probe request/response packets and packets such as ACK, NAK, CNP, ECN-Echo.

The algorithm execution parameter is a configurable adjustment parameter required for algorithm operation, also referred to as a template parameter. Different algorithms correspond to different algorithm execution parameters. For example, Table 5 is a schematic table of algorithm execution parameters of a data center quantized congestion notification (DCQCN) algorithm provided by an embodiment of the present application. As shown in Table 5, a user can configure template parameters of a custom algorithm into a hardware register field as needed to support real-time dynamic algorithm adjustment.

**Table 5**

| Purpose | Parameter | Description | Recommended value |
|---|---|---|---|
| RP rate increase | rp_timer_upd ate_interval | Subtract the timestamp provided by the hardware from the timestamp recorded in the ctx. Each time the difference exceeds this interval by 1 time, the T value increases by 1, triggering a rate increase event. | 55us |
| | rp_byte_reset | The number of bytes transmitted by the hardware during the period since the last reset. Each time this number exceeds this threshold by 1 time, the BC value increases by 1, triggering a rate increase event. | 1MB |
| | rp_f | Detection threshold for BC and T. If Max(T, BC) < F, it is in a fast recovery phase. If Min(T, BC) > F, it enters a hyper increase phase, otherwise, it enters an additive increase phase. | 5 |
| | rp_ai_rate | Increment of Rt each time in the additive increase phase. | 25MB/s |
| | rp_hai_rate | Increment of Rt each time in the hyper increase phase. | 100MB/s |
| | rp_max_rate | Initial value of Rc and Rt, and also the maximum value that Rc can increase to. | 25GB/s |
| RP update α | rp_g | Value of g in the algorithm. | 1/256 |
| | rp_init_alpha | Initial value of α. | 1 |
| RP rate decrease | rp_rate_reduce _monitor_period | Minimum time interval between two rate decrease events. CNP received again within this time will be ignored and will not trigger a rate decrease event, configured to filter frequent CNP messages. | 50us |
| | rp_first_cnp_rate | Reduced rate upon receiving the first CNP. | 12.5GB/s |
| | rp_max_dec_fac | Maximum rate decrease amplitude allowed for one rate decrease. | 1/2 |
| | rp_min_rate | Minimum value allowed for rate decrease to prevent starvation. | 1MB/s |
| | rp_clamp_target_rate | Whether to change the target rate every rate decrease: 1 indicates yes, and 0 indicates no (only the first rate decrease changes the target rate, and subsequent continuous rate decreases skip the target rate change until the first rate decrease after a rate increase). | 1 |

The hardware configuration parameter includes other parameters that constrain the packet transmitting action of the hardware besides the algorithm response value. Table 6 shown below lists typical hardware configuration parameters and functions. More parameters can also be introduced as needed.

**Table 6**

| Parameter name | Parameter meaning | Typical configuration value |
|---|---|---|
| max_burst_size | Maximum single packet burst transmitting size. After the packet burst reaches this amount, the packet transmitting mode is ignored and needs to wait for the next schedule. | 250KB |
| max_in_flight | Maximum in-flight packet size allowed by the hardware. After the in-flight packet reaches this amount, the packet transmitting mode is ignored and packet transmitting needs to be stopped. | 500KB |

In the present application, based on a large number of user-configurable algorithm configuration parameters, such as granularity configuration parameters, event enabling parameters, feedback enabling parameters, algorithm execution parameters, and hardware configuration parameters, a user can flexibly adjust parameter configurations based on an actual algorithm application scenario, to support efficient development of a scenario-adapted congestion control algorithm and improve the effectiveness of the algorithm.

The event interaction model in the packet processing device is described below.

In the present application, the event interaction model in the packet processing device can be a request-response model. In the request-response model, for each request reported by the filtering module, the algorithm execution module must generate a corresponding event response information.

For example, Table 7 is a schematic diagram illustrating a structure of an event request provided by an embodiment of the present application, and Table 8 is a schematic diagram illustrating a structure of event response information provided by an embodiment of the present application.

**Table 7**

| No. | Data field | Meaning |
|---|---|---|
| 1 | flow_id | Flow identifier, configured to identify a unique flow on an endpoint |
| 2 | path_num | Number of paths used, available in multi-path mode, defaults to 1 |
| 3 | path_id | Path identifier for this event request, available in multi-path mode, valid only when path_num is greater than 1 |
| 4 | event_type | Event request type, each bit corresponds to one event signal: 1 indicates that the event is included, and 0 indicates not included |
| 5 | reflection_type | Algorithm feedback mode (hardware packet transmitting mode) includes: rate-based transmitting mode, window-based transmitting mode, token-based transmitting mode, and credit-based transmitting mode. |
| 6 | ts_unit | Timestamp unit |
| 7 | pkt_mode | Whether to use packet mode |
| 8 | pkt_unit | Basic unit of packet size |
| 9 | bw_unit | Basic unit of rate |
| 10 | event_unit | Unit of CNP/ECN event count |
| 11 | timestamp | Event reporting timestamp |
| 12 | pkt_sent_num | Number of transmitted packets, which is valid only when event_type includes the packet transmitted event |
| 13 | pkt_ack_num | Number of acknowledged received packets, which is valid only when event_type includes the packet reception acknowledgment event |
| 14 | pkt_nak_num | Number of unexpected packet acknowledgments, which is valid only when event_type includes the unexpected packet acknowledgment event |
| 15 | cnp_num | Number of CNPs, which is valid only when event_type includes the congestion notification packet event |
| 16 | ece_num | Number of ECN-Echo packets, which is valid only when event_type includes the ecn echo packet event |
| 17 | rtt_fabric | Network propagation delay, which is valid only when event_type includes the RTT probe response packet reception event |
| 18 | rtt_host | Processing delay on the receiving side, which is valid only when event_type includes the RTT probe response packet reception event |
| 19 | probe_bw | Probe bandwidth size |
| 20 | probe_wnd | Probe window size |
| 21 | probe_token | Probe token size |
| 22 | probe_credit | Probe credit size |
| 23 | valid_telemetry_num | Number of valid telemetry data, which is valid only when event_type includes the network telemetry information probe response packet reception event |
| 24 | telemetry_data | Telemetry data information array, each telemetry data information includes but is not limited to: number of TX forwarded bytes (tx_bytes), TX timestamp (tx_timestamp), buffer queue length (queue_length), which is valid only when event_type includes the network telemetry information probe response packet reception event |

**Table 8**

| No. | Data field | Meaning |
|---|---|---|
| 1 | flow_id | Flow identifier, configured to identify a unique flow on an endpoint |
| 2 | status | Event response status: normal or error |
| 3 | path_num | Number of paths used, available in multi-path mode, defaults to 1 |
| 4 | path_id | Path identifier for this event response, available in multi-path mode, valid only when path_num is greater than 1 |
| 5 | priority | Path priority, valid only when path_num is greater than 1 |
| 6 | value_update | Indicates whether the value field is valid |
| 7 | value | Updated rate/window/token/credit value, valid only when value_update is 1 |
| 8 | rtt_probe | Whether to transmit an RTT probe packet |
| 9 | telemetry_probe | Whether to transmit a network telemetry probe packet |
| 10 | bw_probe | Whether to transmit a bandwidth probe packet |
| 11 | wnd_probe | Whether to transmit a window probe packet |
| 12 | token_probe | Whether to transmit a token probe packet |
| 13 | credit_probe | Whether to transmit a credit probe packet |

In some embodiments, the event response information is configured to adjust a packet transmitting action of a network path corresponding to the event response information, or the event response information is configured to adjust packet transmitting actions of all network paths corresponding to the packet processing device.

For example, data fields numbered 5 to 13 can be added to the data structure of the event response information for each network path. That is, an event request of any network path of a flow can respond to all network paths, constraining the priorities of different network paths and the packet transmitting action.

In some embodiments, the event request is exchanged between the algorithm execution module and the filtering module through an event request queue, and the event response information is exchanged between the algorithm execution module and the filtering module through an event response queue.

The event request queue includes an active sub-queue and a commit sub-queue. Correspondingly, the filtering module transmits the event request to the active sub-queue. The filtering module aggregates the event request through the active sub-queue. On a condition that the number of events in the commit sub-queue is greater than or equal to a first quantity threshold, the filtering module controls the event request in the active sub-queue to block and wait until a blocking end condition is satisfied. On a condition that the number of events in the commit sub-queue is less than the first quantity threshold, the filtering module transmits the event request in the active sub-queue to the commit sub-queue, so that the algorithm execution module reads the event request from the commit sub-queue.

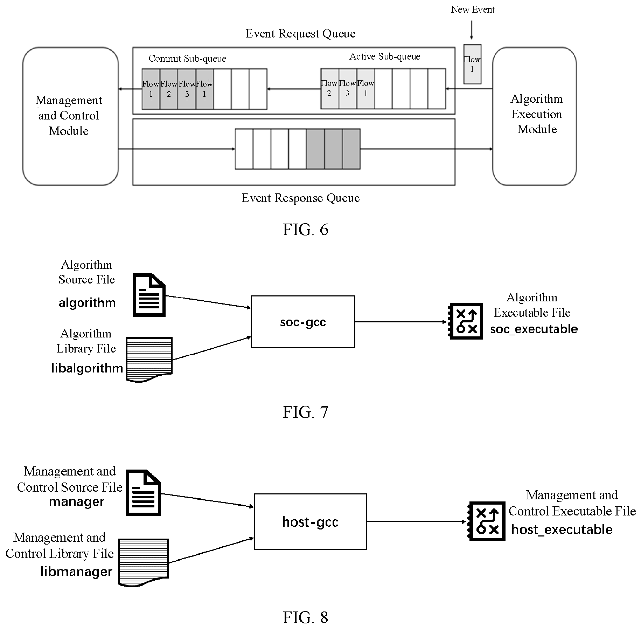

For example, FIG. 6 is another schematic diagram illustrating an interaction of a management and control module and an algorithm execution module provided by an embodiment of the present application. As shown in FIG. 6, an event request first enters an active sub-queue and then enters a commit sub-queue. The active queue can aggregate event requests, while event requests in the commit queue cannot be changed. The algorithm execution module only reads event requests from the commit queue, processes them, generates event response information, and puts it into an event response queue. As shown in FIG. 6, a new event is an event signal for flow 1, which can be aggregated into an existing event for flow 1 in the active sub-queue. When the depth of the commit sub-queue is less than a first quantity threshold M, each new event in the active sub-queue can be placed non-blockingly at the tail of the commit sub-queue. When the number of queued events in the commit sub-queue is greater than or equal to M, new events in the active sub-queue block and wait, allowing aggregation of new events for that flow, until the following conditions can end blocking and enter the commit sub-queue.

The blocking end condition includes: the number of events in the commit sub-queue is less than the first quantity threshold, or the number of events in the commit sub-queue is not full and a number of event requests in the active sub-queue is greater than or equal to a second quantity threshold.

It should be understood that the embodiments of the present application do not limit the first quantity threshold and the second quantity threshold. In some embodiments, the first quantity threshold is M, and the second quantity threshold can be N, where N and M are integers greater than 0. For example, the depths of both the commit sub-queue and the active sub-queue can be set to 32, and M and N can be set to 16 and 24, respectively.

In some optional implementations, when the SoC on the DPU has a multi-core or multi-thread architecture, multiple event request queues and event response queues can be implemented to improve event processing performance. Different algorithm cores can process event requests on multiple event queues in parallel.

How to aggregate event requests is described below.

In some embodiments, after the filtering module aggregates the event request through the active sub-queue, the filtering module generates event information of an aggregated event request based on a type of event aggregation.

It should be understood that event aggregation can reduce the computational power dependency on algorithm cores, reduce computational power loss, and save resources and costs. The present application supports both aggregation of a single event signal of the same flow and aggregation of multiple different event signals of the same flow.

The type of event aggregation includes an accumulative type and an overwriting type. The accumulative type accumulates values in event data fields to generate event information of the aggregated event request, while the overwriting type directly overwrites old values of event data fields with new values to generate event information of the aggregated event request. For example, Table 9 is a schematic table of single event aggregation provided by an embodiment of the present application.

**Table 9**

| Aggregation type | Packet processing event | Aggregation method |
|---|---|---|
| Accumulative type | Packet transmitted event | Accumulate the pkt_sent_num in the new event into the pkt_sent_num value in the old event, and replace the event timestamp with the new event timestamp |
| | Packet reception acknowledgment event | Accumulate the pkt_ack_num in the new event into the pkt_ack_num value in the old event, and replace the event timestamp with the new event timestamp |
| | Unexpected packet acknowledgment event | Accumulate the pkt_nak_num in the new event into the pkt_nak_num value in the old event, and replace the event timestamp with the new event timestamp |
| | Data packet reception event | Accumulate the pkt_recv_num in the new event into the pkt_recv_num value in the old event, and replace the event timestamp with the new event timestamp |
| | Congestion notification packet event | Accumulate the cnp_num in the new event into the cnp_num value in the old event, and replace the event timestamp with the new event timestamp |
| | ECN echo packet event | Accumulate the ece_num in the new event into the ece_num value in the old event, and replace the event timestamp with the new event timestamp |
| | Token probe response packet reception event | Accumulate the probe_token in the new event into the probe_token value in the old event, and replace the event timestamp with the new event timestamp |
| | Credit probe response packet reception event | Accumulate the probe_credit in the new event into the probe_credit value in the old event, and replace the event timestamp with the new event timestamp |
| Overwriting type | New flow event | Overwrite all old data fields with new data fields |
| | Timeout event | |
| | RTT probe request packet transmitting event | |
| | Network telemetry information transmitting event | |
| | Window probe request packet transmitting event | |
| | Bandwidth probe request packet transmitting event | |
| | Source side token request event | |
| | Token probe request packet reception event | |
| | Credit probe request packet reception event | |
| | RTT probe request packet reception event | |
| | Network telemetry information and probe reception event | |
| | Bandwidth probe request packet reception event | |
| | Window probe request packet reception event | |
| | Token probe request packet reception event | |
| | Credit probe request packet reception event | |
| | RTT probe packet transmitted event | |
| | Network telemetry information probe response packet transmitting event | |
| | Bandwidth probe packet transmitted event | |
| | Window probe packet transmitted event | |
| | Token probe packet transmitted event | |
| | Credit probe packet transmitted event | |
| | RTT probe response packet reception event | |
| | Network telemetry information probe response packet reception event | |

It should be noted that during event aggregation, different data fields of the event request structure shown in Table 9 are used for aggregating multiple event requests. Only the event timestamp uses the latest event timestamp for overwriting.

The event discarding mechanism is described below.

In some embodiments, on a condition that the number of events in the event request queue is full, the filtering module discards the event request in the event request queue based on event discarding configuration information, or the filtering module transmits indication information to the receiving module. The indication information is configured to instruct the receiving module to stop transmitting the packet processing event to the filtering module.

It should be understood that since the depth of the event request queue is limited, when the event request queue is full, on a condition that the filtering module needs to report a new event, it cannot directly add it to the event request queue. It can only choose to discard the event or back-pressure the upstream to stop transmitting new events. Through the above discarding configuration information, event discarding in the event request queue can be performed. Through the above indication information, back-pressure can be applied to the upstream to stop transmitting new events.

For example, choosing to back-pressure the upstream may cause the back-pressure to be amplified step by step, leading to a malfunction in the event processing of the hardware, causing unpredictable risks. Therefore, the discarding configuration information can be used to discard events. The discarding configuration information can be as shown in Table 10.

**Table 10**

| Event discard option | Event signal type | Reason analysis |
|---|---|---|
| Not discardable | New flow event | Rare and not |
| | Timeout event | triggerable by the algorithm |
| | Packet transmitted event | Ensures correctness of window calculation |
| | Packet reception acknowledgment event | |
| | Unexpected packet acknowledgment event | |
| | Data packet reception event | |
| | Source side token request event | Ensures token (probe) is feasible and the returned (probe) result is usable |
| | Token probe request packet reception event | |
| | Token probe response packet reception event | |
| | Credit probe request packet reception event | Ensures credit probe is feasible and the returned probe result is usable |
| | Credit probe response packet transmitting event | |
| | Congestion notification packet event ECN echo packet event | Not triggerable by the algorithm |
| Discardable | RTT probe packet transmitted event | Does not affect actual probe execution, and the algorithm can trigger continuously |
| | Network telemetry probe packet transmitted event | |
| | Bandwidth probe packet transmitted event | |
| | Window probe packet transmitted event | |
| | Token probe packet transmitted event | |
| | Credit probe packet transmitted event | |
| | Bandwidth probe response packet transmitting event | |
| | Window probe response packet transmitting event | |
| | Token probe response packet transmitting event | |
| | Credit probe response packet transmitting event | |
| | RTT probe response packet reception event | Does not affect normal packet transmitting, and the algorithm can trigger continuously |
| | Network telemetry information probe response packet reception event | |
| | Bandwidth probe response packet reception event | |
| | Window probe response packet reception event | |
| | Bandwidth probe request packet reception event | |
| | Window probe request packet reception event | |

In the present application, based on the event aggregation and event discarding mechanisms, the throughput requirement for algorithm cores can be significantly reduced, thereby effectively controlling the cost of the algorithm cores while supporting a large number of event signals, eliminating the need to procure and deploy a large number of high-performance algorithm cores.

In some embodiments, the algorithm execution module and the management and control module can be compiled separately. For example, FIG. 7 is a schematic diagram illustrating compilation of an algorithm execution module provided by an embodiment of the present application, and FIG. 8 is a schematic diagram illustrating compilation of a management and control module provided by an embodiment of the present application.

As shown in FIG. 7, the algorithm module is compiled on the SoC. A user-written congestion control algorithm code (including custom .h and .c files) is compiled and linked with a static library provided by the PCC framework to generate a binary executable file. As shown in FIG. 8, the management and control module is compiled on the host side. User-written management and control code (including custom .h and .c files) is compiled and linked with a static library provided by the PCC framework to generate a binary executable file.

In some embodiments, the DPU includes an SoC, and the algorithm execution module runs on a small core of the SoC. The small core of the SoC can be based on an advanced RISC machine (ARM) architecture or a RISC-V instruction set architecture (RISC-V).

In the present application, the rich event signals, multiple event response feedback modes, and the event reporting and response capabilities on the receiving side can support users in designing more flexible and diverse algorithms, effectively ensuring the scalability of algorithm design and implementation, to support customers with different scenario requirements and business needs in selecting or designing appropriate algorithms.

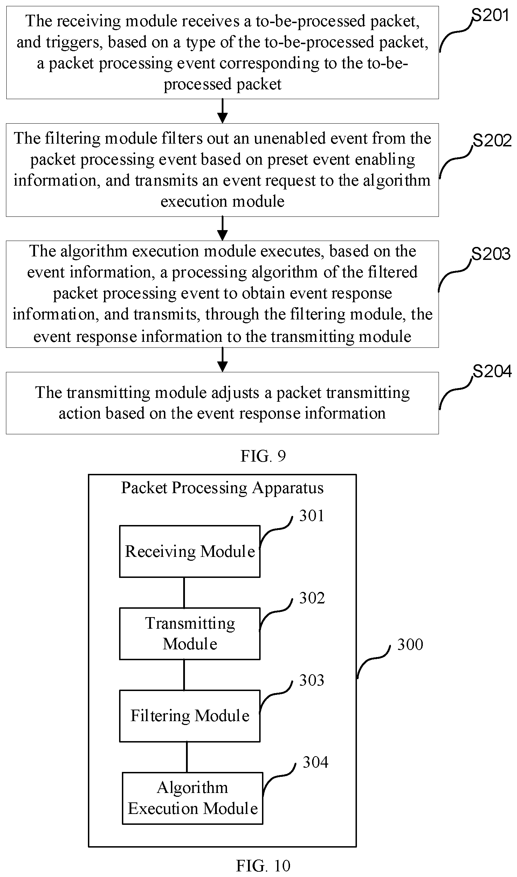

In some embodiments, as shown in FIG. 9, a packet processing method is provided. The method is described using the above packet processing device as an example. The packet processing device includes a receiving module, a transmitting module, a filtering module, and an algorithm execution module. The packet processing method includes steps S201 to S204.

In step S201, the receiving module receives a to-be-processed packet, and triggers, based on a type of the to-be-processed packet, a packet processing event corresponding to the to-be-processed packet.

In some embodiments, before transmitting the event request to the algorithm execution module, the method further includes: performing, by the filtering module, preprocessing on initial information of the filtered packet processing event to generate the event information of the filtered packet processing event.

The preprocessing includes at least one of: calculation processing, cropping processing, merging processing, or discarding processing.

In some embodiments, the to-be-processed packet includes congestion flag information and/or network telemetry information added by a network forwarding device. The network forwarding device is configured to forward a packet between two packet processing devices.

In step S202, the filtering module filters out an unenabled event from the packet processing event based on preset event enabling information, and transmits an event request to the algorithm execution module. The event request includes event information of a filtered packet processing event.

In step S203, the algorithm execution module executes, based on the event information, a processing algorithm of the filtered packet processing event to obtain event response information, and transmits, through the filtering module, the event response information to the transmitting module.

In some embodiments, the packet processing device further includes a management and control module. Before the algorithm execution module executes the processing algorithm of the filtered packet processing event based on the event information to obtain the event response information, the management and control module creates processing resources of the filtered packet processing event and starts an algorithm process in the algorithm execution module through hot upgrade. The algorithm execution module executes the processing algorithm of the filtered packet processing event in the algorithm process based on an algorithm parameter and the event information to obtain the event response information.

In some embodiments, the management and control module obtains, through a congestion control queue, a congestion control entry of the algorithm execution module when executing the processing algorithm. The congestion control entry includes algorithm state information of the processing algorithm. The management and control module adjusts the algorithm parameter based on the algorithm state information.

In some embodiments, the algorithm execution module creates the congestion control entry. The algorithm execution module determines, based on head pointer information and tail pointer information of the congestion control queue, whether the congestion control queue is in a full queue state. On a condition that the congestion control queue is not in the full queue state, the algorithm execution module adds the congestion control entry to a tail of the congestion control queue and flips flag information of the congestion control queue. The management and control module obtains the congestion control entry in the congestion control queue based on the flag information, and updates the head pointer information of the congestion control queue.

In some embodiments, on a condition that the algorithm state information is abnormal, the management and control module releases the processing resources of the filtered packet processing event and exits the algorithm process.

In some embodiments, the algorithm parameter includes a granularity configuration parameter, an event enabling parameter, a feedback enabling parameter, an algorithm execution parameter, and a hardware configuration parameter.

In step S204, the transmitting module adjusts a packet transmitting action based on the event response information.

In some embodiments, the event response information includes a priority and a packet transmitting mode of a network path for each packet transmission. The transmitting module adjusts the packet transmitting action based on the priority and the packet transmitting mode of the network path for each packet transmission.

The packet transmitting mode includes a rate-based transmitting mode, a window-based transmitting mode, a token-based transmitting mode, or a credit-based transmitting mode.

In some embodiments, the event response information is configured to adjust a packet transmitting action of a network path corresponding to the event response information, or the event response information is configured to adjust packet transmitting actions of all network paths corresponding to the packet processing device.

In some embodiments, the event request is exchanged between the algorithm execution module and the filtering module through an event request queue, and the event response information is exchanged between the algorithm execution module and the filtering module through an event response queue.

In some embodiments, the event request queue includes an active sub-queue and a commit sub-queue.

Transmitting the event request to the algorithm execution module includes: transmitting, by the filtering module, the event request to the active sub-queue, aggregating, by the filtering module, the event request through the active sub-queue, when a number of events in the commit sub-queue is greater than or equal to a first quantity threshold, controlling, by the filtering module, the event request in the active sub-queue to block and wait until a blocking end condition is satisfied, where the blocking end condition includes: the number of events in the commit sub-queue is less than the first quantity threshold, or the number of events in the commit sub-queue is not full and a number of event requests in the active sub-queue is greater than or equal to a second quantity threshold, and when the number of events in the commit sub-queue is less than the first quantity threshold, transmitting, by the filtering module, the event request in the active sub-queue to the commit sub-queue, so that the algorithm execution module reads the event request from the commit sub-queue.

In some embodiments, the filtering module generates event information of an aggregated event request based on a type of event aggregation. The type of event aggregation includes an accumulative type and an overwriting type.

In some embodiments, on a condition that a number of events in the event request queue is full, the filtering module discards the event request in the event request queue based on event discarding configuration information, or the filtering module transmits indication information to the receiving module. The indication information is configured to instruct the receiving module to stop transmitting the packet processing event to the filtering module.

In the packet processing method provided by the embodiment of the present application, the method is applied to a packet processing device. The packet processing device includes a receiving module, a transmitting module, a filtering module, and an algorithm execution module. The receiving module receives a to-be-processed packet and triggers, based on a type of the to-be-processed packet, a packet processing event corresponding to the to-be-processed packet. The filtering module filters out an unenabled event from the packet processing event based on preset event enabling information, and transmits an event request to the algorithm execution module. The event request includes event information of a filtered packet processing event. The algorithm execution module executes, based on the event information, a processing algorithm of the filtered packet processing event to obtain event response information, and transmits, through the filtering module, the event response information to the transmitting module. The transmitting module adjusts a packet transmitting action based on the event response information. Since the packet processing device can include a packet receiving side, event processing is performed on the packet receiving side, so that the packet receiving side supports a programmable congestion control framework and has event reporting and response capabilities, thereby effectively improving the scalability of the processing algorithms corresponding to the packet processing events.

It should be understood that although the steps in the flowcharts of the above embodiments are shown sequentially as indicated by arrows, these steps are not necessarily executed sequentially in the order indicated by the arrows. Unless explicitly stated herein, the execution of these steps is not strictly limited to the order, and they may be executed in other orders. Moreover, at least a part of the steps in the flowcharts of the above embodiments may include multiple sub-steps or multiple stages. These sub-steps or stages are not necessarily executed at the same time, but may be executed at different times. The execution order of these sub-steps or stages is not necessarily sequential, but may be performed alternately or alternately with at least a part of other steps or sub-steps or stages of other steps.

Based on the same inventive concept, in an embodiment of the present application, a packet processing apparatus for implementing the above packet processing method is further provided. The solution provided by the apparatus for solving the problem is similar to the implementation scheme described in the above method, so the specific limitations in the embodiments of one or more packet processing apparatuses provided below may refer to the limitations in the above packet processing method, and will not be repeated here.

In some embodiments, as shown in FIG. 10, a packet processing apparatus 300 is provided. The packet processing apparatus 300 includes a receiving module 301, a transmitting module 302, a filtering module 303, and an algorithm execution module 304.

The receiving module 301 is configured to receive a to-be-processed packet and trigger, based on a type of the to-be-processed packet, a packet processing event corresponding to the to-be-processed packet.

The filtering module 302 is configured to filter out an unenabled event from the packet processing event based on preset event enabling information, and transmit an event request to the algorithm execution module 303. The event request includes event information of a filtered packet processing event.

The algorithm execution module 303 is configured to execute, based on the event information, a processing algorithm of the filtered packet processing event to obtain event response information, and transmit, through the filtering module 302, the event response information to the transmitting module 304.

The transmitting module 304 is configured to adjust a packet transmitting action based on the event response information.

Each module in the above packet processing apparatus may be implemented in whole or in part by software, hardware, or a combination thereof. The above modules may be embedded in or independent of a processor in a computer device in the form of hardware, or may be stored in a memory in the computer device in the form of software, so that the processor can call and execute the operations corresponding to the above modules.

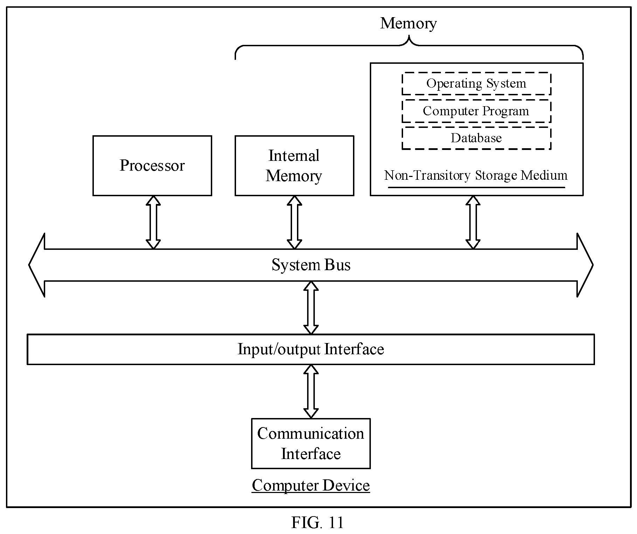

In some embodiments, a computer device is provided. The computer device may be a server, and its schematic diagram illustrating an internal configuration may be shown in FIG. 11. The computer device includes a processor, a memory, an input/output interface (I/O), and a communication interface. The processor, the memory, and the input/output interface are connected through a system bus, and the communication interface is connected to the system bus through the input/output interface. The processor of the computer device is configured to provide computing and control capabilities. The memory of the computer device includes a non-transitory storage medium and an internal memory. The non-transitory storage medium stores an operating system, a computer program, and a database. The internal memory provides an environment for the operation of the operating system and the computer program in the non-transitory storage medium. The database of the computer device is configured to store data. The input/output interface of the computer device is configured to exchange information between the processor and external devices. The communication interface of the computer device is configured to communicate with an external terminal through a network connection. The computer program implements a packet processing method when executed by the processor. The computer device may also include a DPU chip.

Those skilled in the art will understand that the structure shown in FIG. 11 is merely a block diagram illustrating a portion of the structure relevant to the solution of the present application, and does not constitute a limitation on the computer device to which the solution of the present application is applied. The specific computer device may include more or fewer components than shown in FIG. 11, or combine certain components, or have a different arrangement of components.

In some embodiments, a chip is provided. The chip includes the above packet processing apparatus. The chip may be a DPU chip.

In some embodiments, a computer device is provided. The computer device includes a memory and a processor. The memory stores a computer program. The processor implements the above packet processing method when executing the computer program.

In some embodiments, a computer-readable storage medium is provided, having a computer program stored thereon. The computer program implements the above packet processing method when executed by a processor.

In some embodiments, a computer program product is provided, including a computer program. The computer program implements the above packet processing method when executed by a processor.

Those of ordinary skill in the art will appreciate that all or part of the processes in the methods of the above embodiments may be implemented by a computer program instructing relevant hardware. The computer program may be stored in a non-transitory computer-readable storage medium. When executed, the computer program may include the processes of the embodiments of the above methods. Any reference to a memory, a database, or another medium used in the various embodiments provided herein may include at least one of a non-transitory memory and a transitory memory. The non-transitory memory may include a read-only memory (ROM), a magnetic tape, a floppy disk, a flash memory, an optical memory, a high-density embedded non-transitory memory, a resistive random access memory (ReRAM), a magnetoresistive random access memory (MRAM), a ferroelectric random access memory (FRAM), a phase change memory (PCM), a graphene memory, etc. The transitory memory may include a random access memory (RAM) or an external cache memory. By way of illustration and not limitation, the RAM may be in various forms, such as a static random access memory (SRAM) or a dynamic random access memory (DRAM). The database involved in the various embodiments provided herein may include at least one of a relational database and a non-relational database. The non-relational database may include a blockchain-based distributed database, etc., but is not limited thereto. The processor involved in the various embodiments provided herein may be a general-purpose processor, a central processing unit, a graphics processor, a digital signal processor, a programmable logic device, a quantum computing-based data processing logic, etc., but is not limited thereto.

The technical features of the above embodiments can be combined arbitrarily. For the sake of brevity, not all possible combinations of the technical features in the above embodiments are described. However, as long as there is no contradiction in the combination of these technical features, it should be considered as within the scope of this description.

The above embodiments only represent several implementation modes of the present application, and their description is relatively specific and detailed, but it should not be understood as a limitation on the scope of the present application. It should be noted that, for a person of ordinary skill in the art, several variations and improvements can be made without departing from the concept of the present application, and these fall within the scope of protection of the present application. Therefore, the scope of protection of the present application should be subject to the appended claims.

## Claims

1. A packet processing method, applied to a packet processing device, the packet processing device comprising a receiving module, a transmitting module, a filtering module, and an algorithm execution module, and the method comprising:
receiving, by the receiving module, a to-be-processed packet, and triggering, based on a type of the to-be-processed packet, a packet processing event corresponding to the to-be-processed packet;
filtering out, by the filtering module, an unenabled event from the packet processing event based on preset event enabling information, and transmitting an event request to the algorithm execution module, the event request comprising event information of a filtered packet processing event;
executing, by the algorithm execution module, a processing algorithm of the filtered packet processing event based on the event information to obtain event response information, and transmitting, by the algorithm execution module through the filtering module, the event response information to the transmitting module; and
adjusting, by the transmitting module, a packet transmitting action based on the event response information.

2. The method according to claim 1, wherein before transmitting the event request to the algorithm execution module, the method further comprises:
performing, by the filtering module, preprocessing on initial information of the filtered packet processing event to generate the event information of the filtered packet processing event;
wherein the preprocessing comprises at least one of: calculation processing, cropping processing, merging processing, or discarding processing.

3. The method according to claim 1 or 2, wherein the to-be-processed packet comprises congestion flag information and/or network telemetry information added by a network forwarding device, the network forwarding device being configured to forward a packet between two packet processing devices.

4. The method according to any one of claims 1 to 3, wherein the packet processing device further comprises a management and control module, and before executing, by the algorithm execution module, the processing algorithm of the filtered packet processing event based on the event information to obtain the event response information, the method further comprises:
creating, by the management and control module, processing resources of the filtered packet processing event and starting, by the management and control module, an algorithm process in the algorithm execution module through hot upgrade; and
wherein executing, by the algorithm execution module, the processing algorithm of the filtered packet processing event based on the event information to obtain the event response information comprises:
executing, by the algorithm execution module, the processing algorithm of the filtered packet processing event in the algorithm process based on an algorithm parameter and the event information to obtain the event response information.

5. The method according to claim 4, wherein after creating, by the management and control module, the processing resources of the filtered packet processing event and starting, by the management and control module, the algorithm process in the algorithm execution module through hot upgrade, the method further comprises:
obtaining, by the management and control module through a congestion control queue, a congestion control entry of the algorithm execution module when executing the processing algorithm, the congestion control entry comprising algorithm state information of the processing algorithm; and
adjusting, by the management and control module, the algorithm parameter based on the algorithm state information.

6. The method according to claim 5, wherein obtaining, by the management and control module through the congestion control queue, the congestion control entry of the algorithm execution module when executing the processing algorithm comprises:
creating, by the algorithm execution module, the congestion control entry;
determining, by the algorithm execution module based on head pointer information and tail pointer information of the congestion control queue, whether the congestion control queue is in a full queue state;
on a condition that the congestion control queue is not in the full queue state, adding, by the algorithm execution module, the congestion control entry to a tail of the congestion control queue and flipping flag information of the congestion control queue; and
obtaining, by the management and control module, the congestion control entry in the congestion control queue based on the flag information, and updating, by the management and control module, the head pointer information of the congestion control queue.

7. The method according to claim 5 or 6, wherein after obtaining, by the management and control module through the congestion control queue, the algorithm state information of the algorithm process when executing the processing algorithm, the method further comprises:
on a condition that the algorithm state information is abnormal, releasing, by the management and control module, the processing resources of the filtered packet processing event and exiting, by the management and control module, the algorithm process.

8. The method according to any one of claims 4 to 7, wherein the algorithm parameter comprises a granularity configuration parameter, an event enabling parameter, a feedback enabling parameter, an algorithm execution parameter, and a hardware configuration parameter.

9. The method according to claim 1, wherein the event response information comprises a priority and a packet transmitting mode of a network path for each packet transmission; and adjusting, by the transmitting module, the packet transmitting action based on the event response information comprises:
adjusting, by the transmitting module, the packet transmitting action based on the priority and the packet transmitting mode of the network path for each packet transmission;
wherein the packet transmitting mode comprises a rate-based transmitting mode, a window-based transmitting mode, a token-based transmitting mode, or a credit-based transmitting mode.

10. The method according to claim 1 or 9, wherein the event response information is configured to adjust a packet transmitting action of a network path corresponding to the event response information, or the event response information is configured to adjust packet transmitting actions of all network paths corresponding to the packet processing device.

11. The method according to claim 1, wherein the event request is exchanged between the algorithm execution module and the filtering module through an event request queue, and the event response information is exchanged between the algorithm execution module and the filtering module through an event response queue.

12. The method according to claim 11, wherein the event request queue comprises an active sub-queue and a commit sub-queue; and
transmitting the event request to the algorithm execution module comprises:
transmitting, by the filtering module, the event request to the active sub-queue;
aggregating, by the filtering module, the event request through the active sub-queue;
when a number of events in the commit sub-queue is greater than or equal to a first quantity threshold, controlling, by the filtering module, the event request in the active sub-queue to block and wait until a blocking end condition is satisfied, the blocking end condition comprising: the number of events in the commit sub-queue being less than the first quantity threshold, or the number of events in the commit sub-queue being not full and a number of event requests in the active sub-queue being greater than or equal to a second quantity threshold; and
when the number of events in the commit sub-queue is less than the first quantity threshold, transmitting, by the filtering module, the event request in the active sub-queue to the commit sub-queue, so that the algorithm execution module reads the event request from the commit sub-queue.

13. The method according to claim 12, wherein after aggregating, by the filtering module, the event request through the active sub-queue, the method further comprises:
generating, by the filtering module, event information of an aggregated event request based on a type of event aggregation, the type of event aggregation comprising an accumulative type and an overwriting type.

14. The method according to claim 11 or 12, wherein the method further comprises:
on a condition that a number of events in the event request queue is full, discarding, by the filtering module, the event request in the event request queue based on event discarding configuration information, or transmitting, by the filtering module, indication information to the receiving module, the indication information being configured to instruct the receiving module to stop transmitting the packet processing event to the filtering module.

15. The method according to claim 11 or 12, wherein starting the algorithm process in the algorithm execution module through hot upgrade comprises:
storing, by the management and control module, a compilation file corresponding to the processing algorithm in a target storage location, so that a processor of the packet processing device starts the algorithm process by obtaining and loading the compilation file from the target storage location.

16. A packet processing apparatus, wherein the packet processing apparatus comprises a receiving module, a transmitting module, a filtering module, and an algorithm execution module;
the receiving module is configured to receive a to-be-processed packet and trigger, based on a type of the to-be-processed packet, a packet processing event corresponding to the to-be-processed packet;
the filtering module is configured to filter out an unenabled event from the packet processing event based on preset event enabling information, and transmit an event request to the algorithm execution module, the event request comprising event information of a filtered packet processing event;
the algorithm execution module is configured to execute, based on the event information, a processing algorithm of the filtered packet processing event to obtain event response information, and transmit, through the filtering module, the event response information to the transmitting module; and
the transmitting module is configured to adjust a packet transmitting action based on the event response information.

17. A chip, comprising the packet processing apparatus according to claim 16.

18. A computer device, comprising a memory and a processor, the memory storing a computer program, wherein the processor, when executing the computer program, implements the steps of the method according to any one of claims 1 to 15.

19. A computer-readable storage medium, having a computer program stored thereon, wherein the computer program, when executed by a processor, implements the steps of the method according to any one of claims 1 to 15.

20. A computer program product, comprising a computer program, wherein the computer program, when executed by a processor, implements the steps of the method according to any one of claims 1 to 15.
